# EUROPÄISCHE PATENTSCHRIFT

(11) **EP 0 691 236 B1**
(45) Veröffentlichungstag und Bekanntmachung des Hinweises auf die Patenterteilung: **06.08.1997**
(21) Anmeldenummer: 94114574.0
(22) Anmeldetag: 16.09.1994
(51) Int. Cl.: B60L 3/00, B60L 9/22, B60L 7/24, B60L 1/00

(54) **Verfahren zur Überbrückung von Lücken in der Stromversorgung von elektrischen Schienenfahrzeugen**
Device to get through dead sections in the power supply of electric railway vehicles
Procédé pour franchir des tronçons hors tension dans l'alimentation de véhicules ferroviaires électriques

(30) Priorität: 06.07.1994 DE 4423692
(43) Veröffentlichungstag der Anmeldung: 10.01.1996
(73) Patentinhaber: ABB PATENT GmbH, 68309 Mannheim (DE)
(72) Erfinder: Minderlein, Erich, D-34246 Vellmar (DE); Völkl, Anton, D-67354 Römerberg (DE); Hinze, Jens, D-09337 Hohenstein-Ernstthal (DE)
(74) Vertreter: Rupprecht, Klaus, Dipl.-Ing.

(56) Entgegenhaltungen:
- PATENT ABSTRACTS OF JAPAN, vol. 8, no. 73 (M-287) 5. April 1984; & JP-A-58 218 801
- PATENT ABSTRACTS OF JAPAN, vol. 12, no. 459(M-770) 2. Dezember 1988; & JP-A-63 186 505
- PATENT ABSTRACTS OF JAPAN, vol. 14, no. 23 (M-920) 17. Januar 1990; & JP-A-01 264 501
- PATENT ABSTRACTS OF JAPAN, vol. 14, no. 523 (M-1049) 16. November 1990; & JP-A-02 219 401

## Beschreibung

Die Erfindung bezieht sich auf ein Verfahren zur Überbrückung von Lücken in der Stromversorgung von elektrischen Schienenfahrzeugen gemäß dem Oberbegriff des Anspruchs 1.

Bei über eine sogenannte dritte Schiene, d.h. Stromschienen gespeisten Schienenfahrzeugen treten beispielsweise im Bereich von Weichen, Kreuzungen und Trennstellen gravierende Unterbrechungen hinsichtlich der Leistungseinspeisung auf. Es ergibt sich hierdurch neben dem unvermeidlichen Zugkraftverlust eine Unterbrechung des Zugstromversorgungsnetzes, was z.B. durch Ausfall der Beleuchtung zu erkennen ist. Üblicherweise spricht bei Auftreten einer Stromschienenlücke die Störerfassung an, was eine Entladung der Speicherkondensatoren der Leistungseinspeiseschaltung und eine Öffnung des Schalters für das Zugstromversorgungsnetz bewirkt. Die Folge sind häufige Anläufe der Antriebe und eine erhöhte Ausfallrate von Baukomponenten, wie Motoren, Beleuchtung, Schnellschalter, Ladeschaltung für Speicherkondensatoren usw.. Des weiteren ergibt sich eine nachteilige Zeitspanne, bis nach dem Ende der Stromschienenlücke die zur Speisung der Antriebsmotoren dienenden Stromrichter wieder in Betrieb sind und das Zugstromversorgungsnetz wieder zugeschaltet ist.

Aus der jap. Patentanmeldung JP-A-58218801 ist es bekannt, bei stromrichterbetriebene Schienfahrzeugen die Fahrzeugmotoren in den generatorischen Betrieb umzusteuern, wenn Stromversorgungslücken festgestellt werden.

Der Erfindung liegt die Aufgabe zugrunde, ein Verfahren zur Überbrückung von Lücken in der Stromversorgung von elektrischen Schienenfahrzeugen anzugeben, das ein Ansprechen der Störerfassung bei einem Auftreten einer Stromversorgungslücke verhindert und eine optimale Durchfahrt des Zugverbandes über die Stromversorgungslücke gewährleistet.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß das Schienenfahrzeug bei beliebiger Geschwindigkeit im Stande ist, Stromversorgungslücken, die durch die Topologie der Strecke (Weichen, Kreuzungen, Trennstellen) unvermeidbar sind, mit minimaler Unterbrechung der Zugkraft und ohne Unterbrechung bzw. mit nur kurzer Unterbrechung der Zugstromversorgung zu durchfahren. Bei Eintritt des Schienenfahrzeuges in eine Stromversorgungslücke sind die Länge der Lücke als auch die Länge der darauffolgenden Stromversorgung (Stromschienen) unbekannt. Trotzdem wird eine sichere Umsteuerung des Leistungsflusses ohne Ruck innerhalb des Zugverbandes und unnötige Unterbrechung der Zugstromversorgung sichergestellt. Dabei wird ausgenutzt, daß eine sichere Umsteuerung des Leistungsflusses möglich ist, solange der in Fahrtrichtung hintere Stromabnehmer noch Kontakt mit der Stromversorgung hat. Hierdurch werden die Baukomponenten des Zugverbandes geschont, was sich in einer erhöhten Lebensdauer niederschlägt. Der Komfort für die Passagiere im Zugverband wird erhöht, da Stromschienenlücken ohne Ruck durchfahren werden und kein Beleuchtungsausfall eintritt. Weitere Vorteile sind der nachfolgenden Beschreibung entnehmbar.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: die wesentlichen elektrischen Baukomponenten einer an Stromschienen betriebenen Lokomotive mit den Komponenten des Verfahrens zur Überbrückung von Lücken in der Stromversorgung,
- Fig. 2: den Umsteuervorgang vom Fahrbetrieb in den Stützbremsbetrieb
- Fig. 3: ein Geschwindigkeits/Weg-, Zeit-Diagramm für den Stützbremsbetrieb.

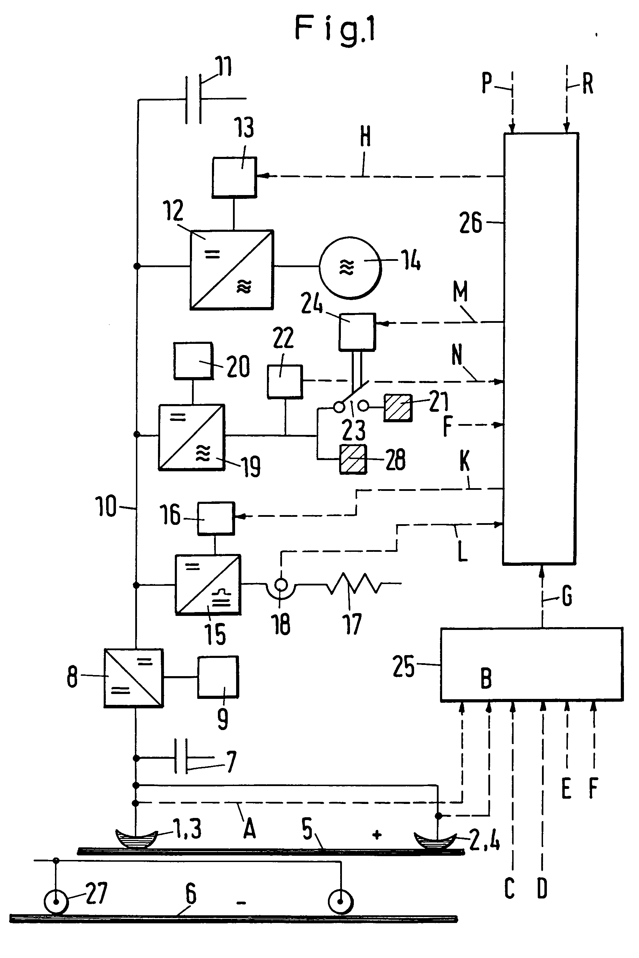

In Fig. 1 sind die wesentlichen elektrischen Baukomponenten einer an Stromschienen (allgemein: an einer Stromversorgung) betriebenen Lokomotive (allgemein: eines Schienenfahrzeuges) mit den Komponenten des Verfahrens zur Überbrückung von Lücken in der Stromversorgung dargestellt. Es sind vier Stromabnehmerschuhe 1...4 (allgemein: Stromabnehmer) einer Lokomotive angedeutet, wobei die Stromabnehmerschuhe 1, 2 die rechte positive Stromschiene 5 sowie die Stromabnehmerschuhe 3, 4 die linke positive Stromschiene kontaktieren. Die positiven Stromschienen 5 sind mit beispielsweise 650 Volt Gleichspannung beaufschlagt, während die Fahrzeugräder 27 und Fahrschienen 6 als negative Stromrückleitung (Masse) dienen. Die Stromabnehmerschuhe 1, 3 sind am vorderen Ende der Lokomotive befestigt, während sich die Stromabnehmerschuhe 2, 4 am hinteren Ende der Lokomotive befinden. Die elektrischen Anschlüsse aller Stromabnehmerschuhe 1, 2, 3, 4 sind miteinander verbunden, bilden den positiven Anschluß und führen zu einem Speicherkondensator 7 sowie zu einem Gleichstromsteller 8 mit Regel/Steuereinrichtung 9. Die elektrischen Anschlüsse der Achsbürsten der Fahrzeugräder 27 sind ebenfalls miteinander verbunden und bilden den negativen Anschluß für die elektrischen Baukomponenten der Lokomotive. Der Gleichstromsteller 8 speist einen Zwischenkreis 10 mit Speicherkondensator 11.

Am Zwischenkreis 10 ist ein Traktionswechselrichter 12 (allgemein: Traktionsstromrichter) mit Regel/Steuereinrichtung 13 angeschlossen, der zur Speisung eines Antriebsmotors 14 (oder mehrerer Antriebsmotoren) dient. Des weiteren liegt ein Bremssteller 15 mit Regel/Steuereinrichtung 16 am Zwischenkreis 10. Der Bremssteller 15 beaufschlagt bedarfsweise einen Bremswiderstand 17, wobei eine Stromerfassungseinrichtung 18 zur Messung des Bremsstromes dient.

Ferner ist ein Zugstromwechselrichter 19 mit Regel/Steuereinrichtung 20 an den Zwischenkreis 10 angeschlossen. Dieser Zugstromwechselrichter 19 speist die Lokomotivhilfsbetriebe 28 und ein Zugstromversorgungsnetz 21, wobei eine Leistungserfassungseinrichtung 22 die Leistung beider Netze 21, 28 mißt. Mittels eines Schalters 23 mit Schalterbetätigungseinrichtung 24 kann der Zugstromwechselrichter 19 vom Zugstromversorgungsnetz 21 getrennt werden.

Mit Ziffer 25 ist eine Einrichtung zum Erkennen von Stromschienenunterbrechungen gekennzeichnet. Dieser Einrichtung 25 liegen Signale A, B, C, D der Stromabnehmerschuhe 1, 2, 3, 4 an. Es ist beispielsweise möglich, die Signale A, B, C, D mit Hilfe von Endschaltern zu erzeugen, welche erfassen, ob ein Kontakt zwischen Stromschiene und entsprechendem Stromabnehmerschuh vorliegt. Alternativ kann auch der Strom ausgewertet werden, welcher über jeden einzelnen Stromabnehmerschuh fließt. Die Signale A, C bzw. B, D werden zusammengefaßt zu Signalen "vorne" bzw. "hinten". Bei Rückwärtsfahrt der Lokomotive werden die Signale "vorne" und "hinten" gekreuzt. Die Fahrtrichtung "vorwärts" oder "rückwärts" der Lokomotive wird der Einrichtung 25 über Signal E gemeldet.

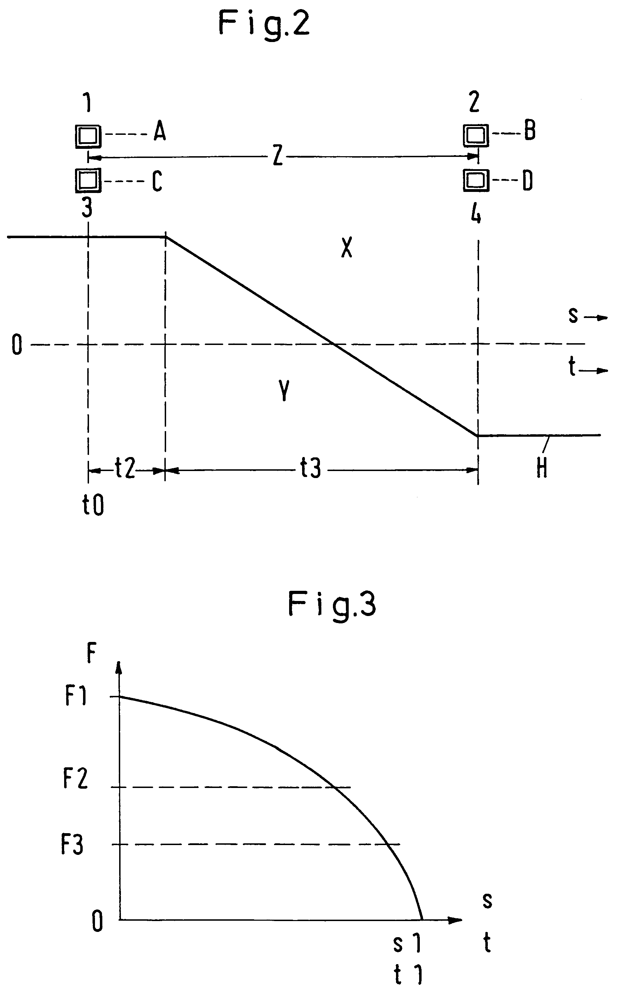

Für die nachfolgenden Betrachtungen wird definiert, daß ein Signal A, B, C, D vorliegt, wenn der betreffende Stromabnehmerschuh 1, 2, 3, 4 Kontakt mit der Stromschiene hat. Bei Ausbleiben beider Signale der in Fahrtrichtung vorderen Stromabnehmerschuhe (Signale A und C bei Vorwärtsfahrt) wird ein Speicher innerhalb der Einrichtung 25 gesetzt, wodurch ein Stromlückensignal G erzeugt wird. Dieser Speicher wird erst wieder zurückgesetzt (d.h. das Signal G entfällt erst dann), wenn die Stromabnehmerschuhe gemäß der Bedingung (AvC) ∩ (BvD) wieder an den Stromschienen liegen und wenn zusätzlich der in Fahrtrichtung vordere Stromabnehmerschuh ununterbrochen während einer Zeitspanne t1 an der Stromschiene anliegt, während der die Lokomotive eine Wegstrecke zurücklegt, die größer ist, als es dem Abstand Z zwischen den vorderen und hinteren Stromabnehmerschuhen (siehe auch Fig. 2) entspricht. Letztere Maßnahme vermeidet das Fahren in eine zweite Stromschienenlücke, die kurz nach einer ersten Stromschienenlücke auftritt, ohne daß die Lokomotive entsprechend für den Stützbremsbetrieb vorbereitet ist. Zur Berechnung dieser Zeitspanne t1 wird der Einrichtung 25 die Geschwindigkeit F der Lokomotive mitgeteilt. Aus F und Z läßt sich t1 ermitteln.

Eine Auswerteeinrichtung 26 greift bei Vorliegen eines Stromlückensignales G unter Beachtung der Betriebsgrenzen insbesondere der Zwischenkreisregelung in den Leistungssteuerprozeß der Lokomotive ein. Die Auswerteeinrichtung 26 berechnet in Abhängigkeit der erforderlichen Leistung des Zugstromversorgungsnetzes 21, des Eigenbedarfs der elektrischen Komponenten des Schienenfahrzeuges inklusive Nachladeleistung für die Speicherkondensatoren und inklusive Verluste und der Geschwindigkeit F der Lokomotive einen Stützbremssollwert H für den Traktionswechselrichter 12 bzw. dessen Regel/Steuereinrichtung 13. Das Leistungssignal N der Leistungserfassungseinrichtung 22 repräsentiert dabei die erforderlichen Leistungen vom Netz 21 und Hilfsbetrieben 28. Dabei ist vorgesehen, daß der Traktionswechselrichter 12 während einer Zeitspanne (siehe t3 in Fig. 2), während der die Lokomotive eine Wegstrecke zurücklegt, die möglichst dem Abstand Z zwischen den vorderen und hinteren Stromabnehmerschuhen entspricht -bzw. infolge von nicht vermeidbaren Verzögerungen geringfügig kleiner ist -, rampenförmig vom motorischen (Fahrbremsbetrieb) in den generatorischen Betriebszustand (Stützbremsbetrieb) umgesteuert wird. Dieser Umsteuerprozeß gilt für den Fall, bei dem sich die Lokomotive kurz vor Auftreten der Stromschienenlücke im motorischen Betriebszustand befindet. Sobald sowohl der vordere als auch der hintere Stromabnehmerschuh keinen Kontakt mehr zur Stromschiene haben, muß der Antriebsmotor 14 im generatorischen Betrieb arbeiten und sowohl die vom Zugstromversorgungsnetz 21 geforderte Leistung als auch die Eigenbedarfsleistung der elektrischen Komponenten der Lokomotive über den Traktionswechselrichter 12 in den Zwischenkreis 10 einspeisen. Der Stützbremssollwert H für das Durchfahren der Stromschienenlücke sollte darüberhinaus eine Dynamikreserve beinhalten um schnelle Leistungsbedarfsschwankungen auszuregeln. Derartige Leistungsbedarfsschwankungen werden mittels des Bremsstellers 15 ausgeregelt, d.h. die durch die Dynamikreserve bedingte zusätzliche Energie wird über den Bremssteller 15 im Bremswiderstand 17 in Wärme umgesetzt. Der Bremssteller 15 bzw. seine Steuer/Regeleinrichtung 16 wird dementsprechend mit einem der Dynamikreserve und den Leistungsbedarfsschwankungen entsprechenden Sollwertsignal K beaufschlagt. Der Bremssteller-Strom wird derart geregelt, daß die Dynamikreserve auch bei Leistungsbedarfsschwankungen, d.h. insbesondere bei Änderung der Leistungsanforderung des Zugstromversorgungsnetzes 21 erhalten bleibt. Zur Regelung liegt der Auswerteeinrichtung 26 das Bremssteller-Stromsignal L der Stromerfassungseinrichtung 18 an.

Prinzipiell gelten die vorstehenden Ausführungen auch für den Fall, bei dem sich die Lokomotive kurz vor dem Auftreten einer Stromschienenlücke im Bremsbetrieb (Rückspeisung in das Netz oder Bremssteller-Betrieb) befindet. Für diesen Fall ist der Stützbremssollwert H derart zu bemessen, daß sowohl das erforderliche Bremsmoment bzw. die Bremsleistung für den Zug erreicht, als auch die Versorgung des Zugstromversorgungsnetzes 21 und des Eigenbedarfs der elektrischen Baukomponenten sichergestellt werden, wobei ebenfalls eine Dynamikreserve vorzusehen ist.

Welche Betriebsart (motorischer Betrieb oder Bremsbetrieb) vorliegt, ermittelt die Auswerteeinrichtung 26 aus der Fahr- und Bremmssollwertvorgabe P des Lokführers. Um bei Auftreten von Stromschienenlücken einen minimalen bzw. keinen Ruck im Zugverband und minimale Dynamik im Zwischenkreis, d.h. minimale Ausgleichsvorgänge, zu erreichen, wird für die Umsteuerung vom motorischen (Fahrbetrieb) in den generatorischen Betriebszustand (Stützbremsbetrieb) oder für die Umsteuerung vom Bremsbetrieb in den Stützbremsbetrieb möglichst die gesamte Zeitspanne ausgenutzt, während der die Lokomotive eine Wegstrecke zurücklegt, die dem Abstand Z zwischen den vorderen und hinteren Stromabnehmerschuhen entspricht. Dementsprechend ergibt sich eine zeitlich lineare, rampenförmige Kraftänderung der Lokomotive, wie sie der den Umsteuervorgang vom Fahrbetrieb in den Stützbremsbetrieb darstellenden Fig. 2 entnehmbar ist.

In Fig. 2 ist der Abstand Z zwischen den vorderen Stromabnehmerschuhen 1, 3 und den hinteren Stromabnehmerschuhen 2, 4 gezeigt. Mit s ist die zurückgelegte Wegstrecke der Lokomotive und mit t die Zeit bezeichnet. Zum Zeitpunkt t0 trifft einer der vorderen Stromabnehmerschuhe 1, 3 auf eine Stromschienenlücke. Die Lokomotive befindet sich im Fahrbetriebszustand X. Nach einer unvermeidbaren Verzögerungszeit t2 erfolgt über den Stützbremssollwert H der Eingriff der Auswerteeinrichtung 26 in die Leistungssteuerung der Lokomotive und die Lokomotive wird während einer Umsteuerzeit t3 linear und rampenförmig vom Fahrbetriebszustand X in den Stützbremsbetriebszustand Y umgesteuert. Die Rampe muß so flach wie möglich sein, um die Baukomponenten optimal zu schonen und um den maximalen Fahrkomfort zu erzielen. Nach Ablauf der Umsteuerzeit t3 treffen die hinteren Stromabnehmerschuhe 2, 4 auf die Stromschienenlücke, d.h. ab diesem Zeitpunkt hat keiner der Stromabnehmerschuhe noch Kontakt zur Stromschiene und die Lokomotive fährt im Stützbremsbetrieb, bis die Stromschienenlücke beendet ist oder bis der nachfolgend beschriebene Blockiermodus vorzugeben ist.

Die zur Umsteuerung vom Fahrbetriebszustand X zum Stützbremsbetriebszustand Y zur Verfügung stehende Umsteuerzeit t3 ist von der Fahrgeschwindigkeit F des Fahrzeuges abhängig und wird von der Auswerteeinrichtung 26 deshalb in Abhängigkeit von F berechnet. Bei Kenntnis der Umsteuerzeit t3 kann die Auswerteeinrichtung 26 in Abhängigkeit des Signales P "Fahr- oder Bremssollwertvorgabe" des Fahrers und dem erforderlichen Stützbremssollwert H eine Umsteuerzeitkonstante berechnen, mit der ein Hochlaufgeber den Traktionswechselrichter 12 von der Fahr- oder Bremssollwertvorgabe des Fahrers zum Stützbremssollwert H steuert. Mit dem Beginn des Umsteuerns werden die Vorgabewerte des Lokführers und die Umsteuerzeitkonstante gespeichert, da die UmSteuerung die Vorgabewerte des Lokführers ändert. Aufgrund der Gegebenheiten der Kennliniennormierung muß für Fahren und Bremsen je eine Hochlaufgeberzeit (= Umsteuerzeitkonstante) errechnet werden. Es ist zweckmäßig, die Umsteuerzeitkonstante zwischen einem vorgegebenen Maximalwert und einem vorgegebenen Minimalwert zu begrenzen.

Aufgrund der zeitlich linearen, die verfügbare Zeitspanne ausschöpfenden Kraftänderung der Lokomotive werden die Baukomponenten der Lokomotive und des Zugverbandes geschont, was sich vorteilhaft auf die Lebensdauer auswirkt. Ferner erhöht sich der Komfort für Passagiere, da ein Ruck im Zugverband reduziert oder verhindert wird.

Außer dem vorstehend beschriebenen Stützbremsbetrieb mit Speisung des Zugstromversorgungsnetzes sind weitere Betriebsarten während des Durchfahrens einer Stromschienenlücke möglich. Wenn das über den Stützbremssollwert H vorgegebene Bremsmoment zu groß ist, z.B. weil die Fahrgeschwindigkeit der Lokomotive im Vergleich zum Leistungsbedarf des Zugstromversorgungsnetzes 21 zu klein ist, muß das Zugstromversorgungsnetz abgeschaltet werden, was über das Signal M der Auswerteeinrichtung 26 an die Schalterbetätigungseinrichtung 24 erfolgt. Folglich wird der Schalter 23 (Leistungsschütz) geöffnet. Gleichzeitig werden die Signale H und K entsprechend geändert, da in dieser Betriebsart (Stützbremsbetrieb ohne Speisung des Zugstromversorgungsnetzes) nur noch der Eigenbedarf der elektrischen Baukomponenten (Kondensator-Nachladung, Verluste) zu decken ist (Lokomotivhilfsbetrieb 28).

Fällt beim vorstehend erwähnten Stützbremsbetrieb ohne Speisung des Zugstromversorgungsnetzes 21 die Geschwindigkeit des Zugverbandes unter einen kritischen unteren Wert ab, schaltet die Auswerteeinrichtung 26 auf die Betriebsart "Blockiermodus" um. Bei dieser Betriebsart wird zusätzlich zur Abschaltung des Zugstromversorgungsnetzes die gesamte Leistungsumformung gesperrt, so daß eine maximale Rollstrecke des Zugverbandes ohne Leistungseinspeisung erzielt wird. Die Speicherkondensatoren 7, 11 sind derart bemessen, daß sie während einer vorgebbaren Zeitspanne mit Sicherheit auf einem Mindestniveau geladen bleiben, so daß eine Wiederaufnahme des Traktionsbetriebes über den Traktionswechselrichter 12 nach Beendigung der Stromschienenlücke in einfacher Weise rasch möglich ist.

Wann von der Betriebsart "Stützbremsbetrieb mit Speisung des Zugstromversorgungsnetzes" in die Betriebsart "Stützbremsbetrieb ohne Speisung des Zugstromversorgungsnetzes" und in die Betriebsart "Blockiermodus" umzusteuern ist, geht aus Fig. 3 hervor, in der ein Geschwindigkeits/Weg-, Zeit-Diagramm für den Stützbremsbetrieb gezeigt ist. Es ist zu erkennen, daß bei einer Geschwindigkeit F1 der Lokomotive zu Beginn des Stützbremsbetriebes lediglich eine bestimmte Wegstrecke s1 zurückgelegt werden kann, bis der Zugverband zum Stillstand kommt, wobei der Stützbremsbetrieb lediglich während einer bestimmten Zeitdauer t1 aufrechterhalten werden kann. Es ist deshalb erforderlich, bei Erreichen einer Geschwindigkeit F2 auf den Stützbremsbetrieb ohne Speisung des Zugstromversorgungsnetzes bzw. bei Erreichen einer Geschwindigkeit F3 (= kritischer unterer Wert) auf die Betriebsart "Blockiermodus" umzusteuern. Entsprechend verlängern sich die maximal möglichen Wegstrecken s der Lokomotive bzw. die maximalen Zeitdauern, die der Zugverband ohne Leistungseinspeisung rollen kann.

Der Lokführer kann auch ferner unabhängig hiervon den Stützbremsbetrieb beenden und den Blockiermodus anwählen, wenn es die Situation erfordert, was durch das Signal R an die Auswerteeinrichtung 26 erfolgt.

Die Auswerteeinrichtung 26 beinhaltet ferner eine Diagnoseeinrichtung mit mehreren Funktionen. Gemäß einer ersten Funktion wird die Zeitdauer des Auftretens einer Stromschienenlücke ermittelt. Wird eine vorgebbare Zeitdauer überschritten, erfolgt eine Fehlermeldung. Gemäß einer zweiten Funktion wird die Länge einer Stromschienenlücke ermittelt. Überschreitet diese Länge einen vorgebbaren Wert, erfolgt eine Fehlermeldung. Vorzugsweise schaltet die Auswerteeinrichtung 26 den Stützbremsbetrieb und den Blockiermodus ab, wenn eine Fehlermeldung vorliegt. Aufgrund von auftretenden Fehlermeldungen können beispielsweise Schäden an den Stromabnehmerschuhen erkannt werden (z.B. abgebrochener Schleifkontakt). Gemäß einer dritten Funktion werden unsinnige Kombinationen von Signalen der Stromabnehmerschuhe erkannt, was ebenfalls eine Fehlermeldung zur Folge hat.

Vorstehend wird von einer Anlage ausgegangen, die je nach topographischer Anforderung eine rechte oder eine linke Stromschiene aufweisen kann. Dementsprechend ist die Lokomotive mit rechten und linken Stromabnehmerschuhen ausgerüstet. Es sind andere Anlagen ausführbar, die lediglich einen vorderen und einen hinteren Stromabnehmerschuh erfordern, beispielsweise wenn die positive Stromschiene mittig zwischen den Fahrschienen angeordnet ist.

Beim vorstehend beschriebenen Ausführungsbeispiel wird von einer Speisung des Schienenfahrzeuges über Stromabnehmerschuhe ausgegangen, welche Kontakt mit Stromschienen haben. Das erfindungsgemäße Verfahren ist jedoch nicht darauf beschränkt, sondern auch bei über Fahrdrahtoberleitungen betriebene Schienenfahrzeugen einsetzbar.

## Patentansprüche

1. Verfahren zur Überbrückung von Lücken in der Stromversorgung von elektrischen, stromrichtergespeisten Schienenfahrzeugen, wobei das Schienenfahrzeug an seinen beiden Enden mit Stromabnehmern zur Kontaktierung mit der Stromversorgung versehen ist, dadurch gekennzeichnet, daß der Traktionsstromrichter (12,13) während einer Zeitspanne (t3), während der das Schienenfahrzeug eine Wegstrecke zurücklegt, die möglichst nur geringfügig kleiner als der Abstand (Z) zwischen den vorderen und hinteren Stromabnehmern (1,2,3,4) ist, vom Fahrbetrieb in den Stützbremsbetrieb, d.h. generatorischen Betriebszustand oder vom Bremsbetrieb in den Stützbremsbetrieb umgesteuert wird, sobald ein in Fahrtrichtung vorderer Stromabnehmer keinen Kontakt zur Stromversorgung hat.

2. Verfahren nach Anspruch 1, dadurch gekennzeichnet, daß in Abhängigkeit der Fahrgeschwindigkeit (F) des Schienenfahrzeuges, der Leistungsanforderung des Zugstromversorgungsnetzes (21) und des Eigenbedarfs der elektrischen Komponenten des Schienenfahrzeuges ein Stützbremssollwert (H) für den Traktionsstromrichter (12,13) vorgegeben wird.

3. Verfahren nach Anspruch 2, dadurch gekennzeichnet, daß zusätzlich eine Dynamikreserve bei der Vorgabe des Stützbremssollwertes (H) vorgesehen wird, wobei die hierdurch bedingte zusätzliche Energie über den Bremssteller (15,16) im Bremswiderstand (17) in Wärme umgesetzt wird.

4. Verfahren nach Anspruch 2 und/oder 3, dadurch gekennzeichnet, daß während des Stützbremsbetriebes das Zugstromversorgungsnetz (21) abgeschaltet ist, wenn die Fahrgeschwindigkeit (F) des Schienenfahrzeuges zu gering im Verhältnis zum Leistungsbedarf (N) des Zugstromversorgungsnetzes (21) ist.

5. Verfahren nach Anspruch 4, dadurch gekennzeichnet, daß zur Einstellung der Betriebsart "Blockiermodus" zusätzlich alle Stromrichter gesperrt werden, wenn die Fahrgeschwindigkeit (F) des Schienenfahrzeuges einen kritischen unteren Wert (F3) unterschreitet.

6. Verfahren nach einem der Ansprüche 1 bis 5, dadurch gekennzeichnet, daß die Betriebsarten "Stützbremsbetrieb" oder "Blockiermodus" beendet werden, wenn vordere und hintere Stromabnehmer (1,2,3,4) wieder Kontakt mit der Stromversorgung (5,6) haben und wenn zusätzlich die in Fahrtrichtung vorderen Stromabnehmer ununterbrochen während einer Zeitspanne (t1) an der Stromversorgung liegen, während der das Schienenfahrzeug eine Wegstrecke zurücklegt, die größer ist als der Abstand (Z) zwischen den vorderen und hinteren Stromabnehmern.

7. Verfahren nach einem der Ansprüche 1 bis 6, gekennzeichnet durch eine Diagnose, welche die Zeitdauer und/oder Wegstrecke einer Stromversorgungslücke erfaßt und Fehlermeldungen abgibt, wenn vorgegebene Zeitdauern und/oder Wegstrecken-Werte überschritten werden.

## Claims

1. Method for bridging gaps in the power supply for electrical, converter-fed rail vehicles, the rail vehicle being provided at both its ends with current collectors for making contact with the power supply, characterized in that the traction converter (12, 13) is switched from traction mode to regenerative braking mode, that is to say generator operation or from braking mode to regenerative braking mode during a period (t3) during which the rail vehicle travels a distance which, if possible, is only slightly shorter than the distance (Z) between the front and rear current collectors (1, 2, 3, 4), as soon as a front current collector in the direction of travel is not in contact with the power supply.

2. Method according to Claim 1, characterized in that a nominal regenerative braking value (H) for the traction converter (12, 13) is predetermined in dependence on the travelling speed (F) of the rail vehicle, the power requirement of the train power supply system (21) and the inherent requirement of the electrical components of the rail vehicle.

3. Method according to Claim 2, characterized in that a reserve in dynamic range is additionally provided in the input of the nominal regenerative braking value (H), the resulting addition of energy being converted into heat in the braking resistor (17) via the braking controller (15, 16).

4. Method according to Claim 2 and/or 3, characterized in that during the regenerative braking mode, the train power supply system (21) is switched off when the travelling speed (F) of the rail vehicle is too low in comparison with the power requirement (N) of the train power supply system (21).

5. Method according to Claim 4, characterized in that, for setting the "blocking mode", all converters are additionally inhibited if the travelling speed (F) of the rail vehicle drops below a critical lower value (F3).

6. Method according to one of Claims 1 to 5, characterized in that the operating modes "regenerative braking mode" or "blocking mode", are ended when front and rear current collectors (1, 2, 3, 4) are again in contact with the power supply (5, 6) and when additionally the front current collectors in the direction of travel are uninterruptedly in contact with the power supply during a period (t1) during which the rail vehicle travels a distance which is greater than the distance (Z) between the front and rear current collectors.

7. Method according to one of Claims 1 to 6, characterized by a diagnostic system which detects the duration and/or distance of a power supply gap and outputs error messages when predetermined durations and/or distance values are exceeded.

## Revendications

1. Procédé pour le franchissement de discontinuités dans l'alimentation en courant de véhicules ferroviaires électriques alimentés par convertisseur, dans lequel le véhicule ferroviaire est muni à ses deux extrémités de frotteurs de prise de courant pour entrer en contact avec l'alimentation en courant, caractérisé en ce que le convertisseur de courant de traction (12, 13), pendant une période de temps (t3) pendant laquelle le véhicule ferroviaire parcourt une distance qui n'est qu'aussi peu que possible plus petite que la distance (Z) entre les frotteurs de prise de courant antérieurs et postérieurs (1, 2 , 3, 4), est changé du fonctionnement de circulation en fonctionnement en freinage par récupération, c'est-à-dire à l'état de fonctionnement en génératrice, ou du fonctionnement en freinage en fonctionnement en freinage par récupération, dès qu'un frotteur de prise de courant antérieur selon le sens de circulation n'a plus aucun contact par rapport à l'alimentation en courant.

2. Procédé suivant la revendication 1, caractérisé en ce qu'en fonction de la vitesse de circulation (F) du véhicule ferroviaire, de la demande en énergie du réseau d'alimentation de courant du train (21) et des besoins propres des composants électriques du véhicule ferroviaire, une valeur de consigne de freinage par récupération (H) est donnée au préalable pour le convertisseur de courant de traction (12, 13).

3. Procédé suivant la revendication 2, caractérisé en ce qu'il est prévu en plus une réserve dynamique pour la référence de la valeur de consigne de freinage par récupération (H), l'énergie supplémentaire conditionnée par cela étant transformée en chaleur dans la résistance de freinage (17) par l'intermédiaire du moyen de réglage de freinage (15, 16).

4. Procédé suivant la revendication 2 ou 3, caractérisé en ce que, pendant le fonctionnement en freinage par récupération, le réseau d'alimentation en courant du train (21) est débranché lorsque la vitesse de circulation (F) du véhicule ferroviaire est trop petite par rapport aux besoins en énergie (N) du réseau d'alimentation en courant du train (21).

5. Procédé suivant la revendication 4, caractérisé en ce que pour le réglage du mode de fonctionnement "mode à blocage", tous les convertisseurs sont en outre bloqués lorsque la vitesse de circulation (F) du véhicule ferroviaire dépasse vers le bas une valeur inférieure critique (F3).

6. Procédé suivant l'une des revendications 1 à 5, caractérisé en ce que les modes de fonctionnement "fonctionnement en freinage par "récupération" et "mode à blocage" sont terminés lorsque les frotteurs de prise de courant antérieurs et postérieurs (1, 2, 3, 4) sont à nouveau en contact avec l'alimentation en courant (5, 6) et lorsqu'en plus les frotteurs de prise de courant antérieurs selon de sens de circulation sont appliquées de façon ininterrompue à l'alimentation en courant pendant une période de temps (t1) pendant laquelle le véhicule ferroviaire parcourt une distance qui est supérieure à la distance (Z) entre les frotteurs de prise de courant antérieurs et postérieurs.

7. Procédé suivant l'une des revendications 1 à 6, caractérisé par une diagnose qui saisit la durée de temps et/ou la distance parcourue d'une discontinuité d'alimentation en courant et qui délivre des avertissements de défaut lorsque des durées de temps et/ou des valeurs de distance parcourue prédéterminées sont dépassées.
